# EUROPEAN PATENT APPLICATION

(11) **EP 1 760 593 A1**
(43) Date of publication of application: **07.03.2007**
(21) Application number: 05726985.4
(22) Date of filing: 24.03.2005
(51) Int. Cl.: G06F 12/00, G06F 13/00, H04N 7/173

(54) **BACKUP SYSTEM AND BACKUP METHOD**

(30) Priority: 25.03.2004 JP 2004090431
(71) Applicant: Softbank BB Corp., Tokyo 105-7304 (JP)
(72) Inventor: SON, Masayoshi, Tokyo 106-0041 (JP)
(74) Representative: Grünecker, Kinkeldey, Stockmair & Schwanhäusser Anwaltssozietät
(86) International application number: PCT/JP2005/005425
(87) International publication number: WO 2005/093579

(57) **Abstract**

A backup system has a hard disk 16 connected to a terminal device 1 and accumulating data, a backup server 43 connected to the terminal device 1 through an IP network 3, a monitoring section 15e for monitoring on the terminal device 1 side a data occupancy ratio in the hard disk 16, an extracting section 15b for extracting data depending on an data attribute when the data occupancy ratio is greater than a predetermined level, an uploading section 15a for transmitting the extracted data to the backup server, a difference producing section 43b provided on the backup server 43 side and producing data of a difference between existing data having been accumulated and the uploaded data, a user database 44b for accumulating the produced difference data, and a downloading section 43e for producing data for download and transmitting the produced data to the terminal device 1, the data for download being produced from the existing data and the difference data. This structure can reduce a load on the backup server side when data accumulated in the terminal device are backed up by the backup server.

## Description

### Technical Field

The present invention relates to a backup system and a backup method for transmitting data accumulated in a personal computer, a PDA (Personal Digital Assistance), a mobile terminal such as a cellular phone, and the like to a backup server on an IP network such as the Internet.

### Background Art

In recent years, it becomes possible to view and listen images, motion pictures, music and the like with a mobile terminal such as a personal computer, a PDA or a mobile telephone, and thereby it is desirable to increase of the capacity of the storage device that is available for storing such content.

On the other hand, while the capacity of this storage device is increasing, the size of data to be stored also tends to increase so that there is a limit on the amount of data which can be stored' therein. In contrast to this, it is proposed as the so-cailed backup service to upload the data, which is stored in a terminal, to a backup server located on a communication network such as the Internet and save the data in the backup server (for example, refer to Japanese Patent Published Application No. 2002-132560).

In accordance with the technique as described in this publication, while a terminal device and a backup server are connected through a communication line, the terminal device is provided with a storage section for storing a program which is executed by itself (the terminal device itself) and a communication section for transmitting the program stored in the storage section to a backup device through the communication line. On the other hand, the backup device is provided with a communication section for receiving the program transmitted from the terminal device through the communication line, and a storage section for storing the program as received by the communication section.

However, in the case of the technique disclosed in the publication as described above, since all the data uploaded from terminal devices is equally stored, there is a problem that the load on the server side is increased to rise the cost which is required for providing the service.

The present invention is invented by taking into consideration the above situation, and it is an object thereof to provide a backup system and a backup method in which the load on the backup server side can be lessened when the data stored in terminal devices are backed up.

### Summary of The Invention

In order to accomplish the object as described above, the present invention comprises: a storage device connectable to a terminal device and operable to accumulate data; a backup server connectable to the terminal device through an IP network which is constructed by connecting communication lines with each other; a monitoring section operable to monitor the data occupancy ratio in the storage device on the terminal device side; an extracting section operable to extract, when the data occupancy ratio is greater than a predetermined ratio, data in accordance with the data attribute in the storage device; an upload section operable to transmit the data, which is extracted by the extracting section, to the backup server; a difference data producing section located on the backup server side and operable to produce difference data between existing data which is already accumulated and upload data which is transmitted by the upload section; a difference accumulating section operable to accumulate the difference data which is produced; a downloading section operable to produce download data from the existing data and the difference data in response to a request from the terminal system, and transmit the download data, which is produced, to the terminal device.

In accordance with the present invention as described above, since the data accumulated in the storage device on the terminal device side is extracted and uploaded in accordance with the property thereof, unnecessary upload can be avoided and the amount of data to be backed up can be reduced in the server. Also, since only the difference from the data which has been already accumulated is stored on the backup server side, it is possible to avoid storing redundant data and make effective use of the storage capacity of the backup server.

In the case of the above invention, it is preferred that the extracting section is operable to determine, as data attributes, the extension and last update date and time of a data file, and extract data in accordance with a data attribute which is set by a user. In this case, since the data to be backed up is selected in accordance with the needs of the user of the terminal device, it is possible to perform the operation of backing up data in accordance with the priority level on the basis of the determination of the individual user.

In the case of the above invention, it is preferred that the upload data is broadcast content, which is received through a radio wave broadcast and stored on the broadcast content side, and that the difference data producing section is operable to produce the difference data as noise which is generated during receiving the broadcast content. In this case, with respect to the broadcast content data such as movies and television programs corresponding to which there is original content somewhere else, since it is likely that a plurality of users upload substantially the same data, the original content is stored as existing data, and only noise generated as differences during receiving broadcast is stored as difference data for each content. By this configuration, it is possible to accurately reproduce the content of the respective user while reducing the load on the server side.

In the case of the above invention, it is preferred that the broadcast content is reception content which is received through a radio wave broadcast by a content server located on the IP network and which is rebroadcasted by a radio wave transmitter section connected through the IP network, and that the existing data in the backup server is the reception content. Also, in the case of the above invention, it is preferred that the radio wave transmitter section is located alongside the railway or the roadway. In this case, when broadcast content is received and recorded in a mobile terminal, an in-vehicle television receiver or the like, it is possible to receive content with higher quality images by receiving the broadcast content which is rebroadcasted through the IP network. Also, on the backup server side, it is possible to save the broadcast content, which is received, as original data (existing data), secure the acquisition of the existing data, and make it easy to produce difference data.

### Brief Description Of The Drawings

[Fig. 1] Fig. 1 is an explanatory view for showing the backup system in accordance with a first embodiment, in which (a) is a block diagram for showing the relationship between a terminal device and a backup server, (b) is a block diagram for showing the structure of the backup server, and (c) is a block diagram for showing the structure of an HDD management section.
[Fig. 2] Fig. 2 is a flow chart for showing the operation process of the backup service in accordance with the first embodiment, in which (a) shows the operation on the terminal side and (b) shows the operation on the server side.
[Fig. 3] Fig. 3 is an explanatory view for showing the overall configuration of the information delivery system in accordance with a second embodiment.
[Fig. 4] Fig. 4 is an explanatory view for showing the functionality of the combination output section in accordance with the second embodiment.
[Fig. 5] Fig. 5 is an explanatory view for showing the functionality of the terminal equipment in accordance with the second embodiment, in which (a) is a block diagram for showing the relationship among the terminal equipment and peripheral devices, and (b) is a flow chart for showing the operations of them.
[Fig. 6] Fig. 6 is an explanatory view for showing the overall, configuration of the information delivery system in accordance with an exemplary modification of the second embodiment.

### Best Mode for Carrying Out the Invention

### [First Embodiment]

### (Backup System)

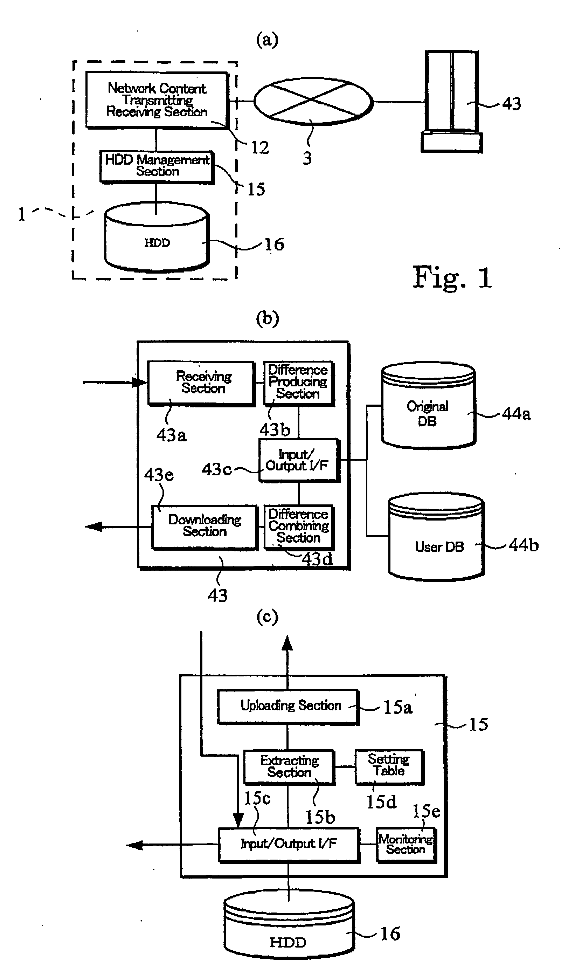

The first embodiment of the present invention will be explained with reference to the drawings. Fig. 1 is an explanatory view for showing the overall configuration of a backup system in accordance with the present embodiment.

As shown in the same figure, the backup system in accordance with the present embodiment is comprised mainly of a terminal device 1 which can be connected with an IP network 3 and is provided with a hard disk 16 as storage means, and a backup server 43 located on the IP network 3.

The IP network 3 is a distributed communication network which is constructed by connecting a variety of communication lines (a telephone line, an ISDN line, a public network such as an ADSL line, a dedicated communication line, and a radio communication network) to each other by the use of the communication protocol TCP/IP. This IP network 3 may be a LAN such as an intranet (a network within a company) based on 10BASE-T, 100BASE-TX or the like.

The terminal device 1 is an arithmetic operation section provided with a CPU and can be implemented by a general purpose computer, for example, a personal computer, or a dedicated device, inclusive of a mobile computer and a PDA (Personal Digital Assistance). In addition to this, as shown in Fig. 1(a), the terminal device 1 is provided with a network content acquisition section 12 for receiving network content from Web servers and the like which are distributed and located on the IP network 3 and transmitting the data as accumulated in the hard disk 16 to the backup server 43. Furthermore, the terminal device 1 is provided with an HDD management section 15 for inputting and outputting data to and from the hard disk 16, and connected with the backup server 43 through the IP network 3.

As shown in Fig. 1(b), the above backup server 43 is provided with an original database 44a for accumulating original data which is existing data as already stored therein, and a user database 44b for accumulating user data (difference data) in storage areas which are provided separately for the respective users.

In addition to this, the backup server 43 is provided with a receiving section 43a for receiving data which is uploaded from the users, a difference producing section 43b for producing the difference data between the data as received and the original data, and an input/output I/F 43C for inputting and outputting the data to and from the respective databases. Furthermore, the backup server 43 is provided with a difference combining section 43d for producing download data from the original data and the difference data in response to an request from the terminal device 1 side, and a downloading section 43e for transmitting the download data to the terminal device 1.

On the other hand, as shown in Fig. 1(c), the HDD management section 15 provided in the terminal device 1 is provided with a monitoring section 15e for monitoring the data occupancy ratio in the hard disk 16, an extracting section 15b for extracting data in accordance with data attributes in the hard disk 16 when the data occupancy ratio is greater than a predetermined ratio, an upload section 15a for transmitting the data as extracted to the backup server 43 as upload data.

Meanwhile, in the case of the present embodiment, the extracting section 15b is provided with a setting table 15d for associating data attributes (extensions, last update date and time) which are set by the user respectively with importance levels, and serves to check the extension and last update date and time of data files as data attributes and extract data in accordance with the data attributes which are set by the user by referring to the setting table 15d. For example, data reaching a predetermined age from its last update time, data having a large data size such as a picture, an image or a sound file, an important document data such as spreadsheet data or word processor data, and the like data are preferentially backed up.

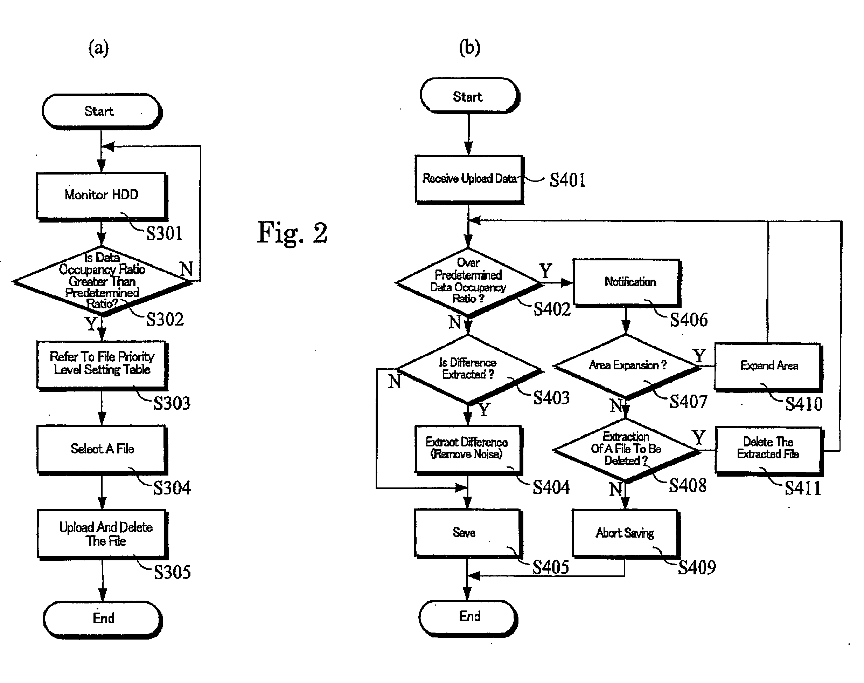

The operation of the backup system having the structure as described above will be explained. Fig. 2(a) is a flow chart for showing the operation process on the terminal device 1 side, and Fig. 2(b) is a flow chart for showing the operation process on the backup server 43 side.

First, on the terminal device 1 side, each time data is written to the hard disk 16, the data occupancy ratio in the hard disk is monitored by the monitoring section 15e in step S301 in order to determine whether or not the data occupancy ratio is greater than the predetermined ratio in step S302. If it is determined that the data occupancy ratio is not greater than the predetermined ratio in step S302 ("N" in step S302), the process is returned to step S301 in order to repeatedly continue monitoring by the loop process. On the other hand, if it is determined that the data occupancy ratio is greater than the predetermined ratio in step S302 ("Y" in step S302), the process proceeds to step S303.

In step S303, the file to be uploaded is selected in step S304 by referring to the setting table 15d with respect to the priority level of files, and the file as selected is uploaded to the backup server 43 through the upload section 15a and deleted from the hard disk 16 in step S305.

On the backup server 43 side in which the data uploaded from the terminal device 1, is received by the receiving section 43a, it is determined whether or not the data occupancy ratio of the user database 44b is greater than the predetermined ratio in step S402. In the case where it is determined that the data occupancy ratio is not greater than the predetermined ratio in step S402 ("N" in step S402), it is determined in step S403 whether or not the accumulation of only the difference is selected by the user, and if the accumulation of only the difference is not selected ("N" in step S403), the data as uploaded is stored as it is in step S405.

On the other hand, if the accumulation of only the difference is selected ("Y" in step S403), the difference between the data as uploaded and the data stored in the original database 44a is generated in step S404, and the difference data is stored in step S405. When this difference data is generated, in the case where the data as uploaded contains images, sounds and the like, the noise components are extracted and stored as the differences.

In the case where it is determined that the data occupancy ratio is greater than the predetermined ratio in step S402 ("Y" in step S402), the user is notified of this determination and prompted to provide the instruction as to whether or not the user area is expanded in step S406. If the user desires area expansion ("Y" in step S407), the area is expanded in step S410, followed by performing the process from the above step S402. In the case where this area is expanded, the charging process is performed in correspondence with the amount of expansion.

If the user does not desire area expansion in step S407 ("N" in step S407), the user is prompted to select whether or not data in the user database 44b is deleted and whether or not the extraction of a file to be deleted is performed in step S408, and if deleting the file is not desired the backup process is cancelled in step S409. If the user desires to delete the file in step S408, the above setting table 15d is referred to so that data of a low importance is preferentially deleted in step S411, followed by performing the process from the above step S402.

In accordance with the backup system of the present embodiment, since the data accumulated in the hard disk 16 on the terminal device 1 side is extracted in accordance with the property thereof and uploaded, unnecessary upload can be avoided and the amount of data to be backed up can be reduced in the server. Also, since only the difference from the data which has been already accumulated is stored on the backup server 43 side, it is possible to avoid storing redundant data and make effective use of the storage capacity of the backup server.

Furthermore, in accordance with the present embodiment, since the data to be backed up is selected with reference to the level of importance, which is set by the user, with reference to the setting table 15d, which is also set by the user's determination, it is possible to perform the operation of backing up data in accordance with the priority level on the basis of the determination of the individual user.

### [Second Embodiment]

### (Overall Configuration Of Information Delivery System)

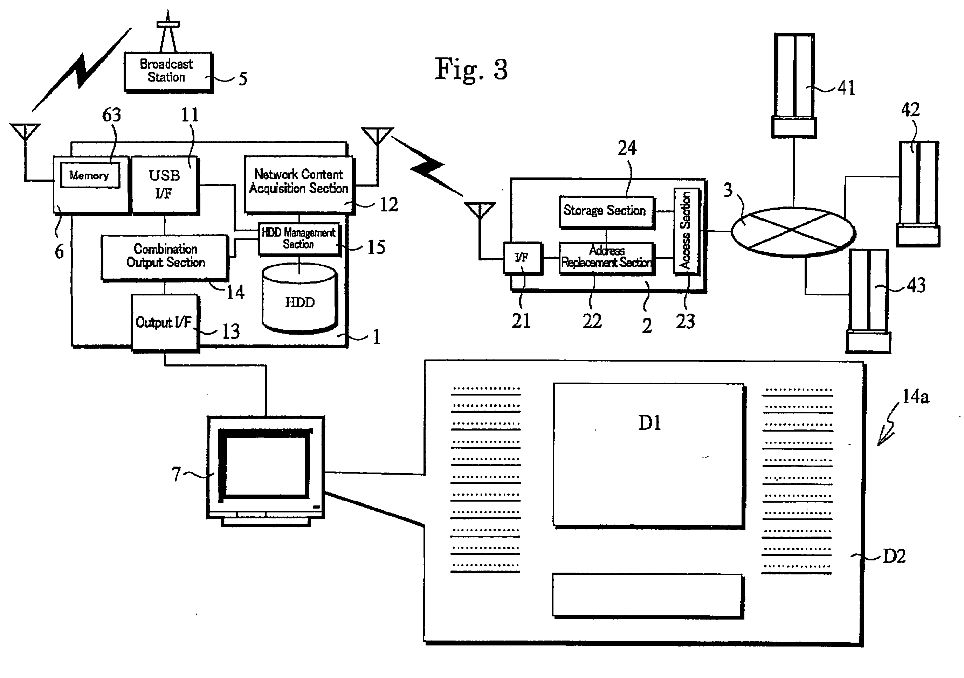

A second embodiment of the present invention will be explained with reference to drawings. In the case of the present embodiment, an example will be explained in the case where the backup system of the present invention is applied to the information delivery system for providing a television combined Web page service. Fig. 3 is an explanatory view for showing the overall configuration of the information delivery system in accordance with the present embodiment.

As shown in the same figure, the information delivery system in accordance with the present embodiment is comprised mainly of a terminal device 1 provided with a monitor 7, a terminal equipment 2 for connecting with an IP network 3, a broadcast station 5 for providing a broadcasting service, and a content server 4 located on the IP network 3.

The terminal equipment 2 is an equipment for connecting the terminal device 1 with the IP network 3, and includes a modulator demodulator device such as a modem for converting digital data into a voice signal and vice versa when connecting with a telephone line, a signal conversion device such as an ADSL modem for converting an ADSL signal into a LAN signal and vice versa when connecting with an ADSL line, a DSU and a terminal adapter which are required for connecting with an ISDN line, and so forth.

The content server 4 is a server computer or software capable of transmitting network content such as HTML (HyperText Markup Language) files, image files, music files and the like as WWW (World Wide Web) documents, and serves to accumulate information such as HTML files and image files and transmit the information in response to a request from client software through the IP network such as the Internet.

(Terminal Equipment 1) In the case of the present embodiment, the terminal equipments 1 is provided with components required for receiving the television combined Web page service in addition to the components which have been explained in conjunction with the above first embodiment. More specifically speaking, the terminal device 1 is provided with a broadcast content receiving section 6 for receiving broadcast content which is broadcasted through radio waves, a network content acquisition section 12 for acquiring network content which is delivered through the IP network 3 and a combination output section 14 for combining the broadcast content with the network content and outputting the content as combined, and connected with a monitor 7 through an output I/F 13. The monitor 7 is a display device such as a liquid crystal display, a CRT display, a plasma display or the like, and connected with the terminal device 1 through the output interface 13 in order to output images and sounds.

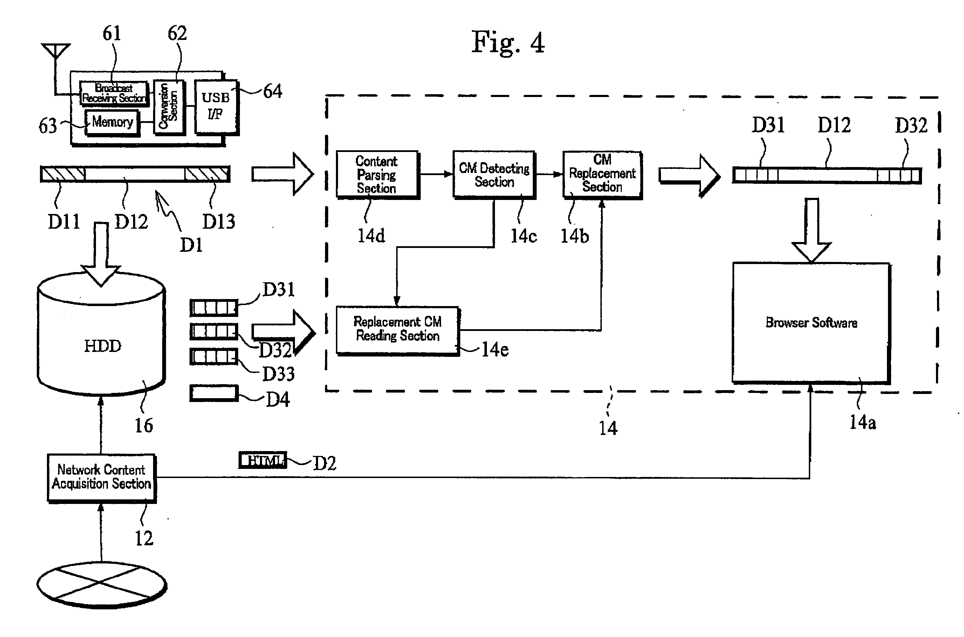

As illustrated in Fig. 4 in detail, the broadcast content receiving section 6 is provided with a broadcast receiving section 61 for receiving a broadcast signal, a conversion section 62 for modulating a radio wave signal as received, converting it into a predetermined digital signal and outputting the converted signal, and in the case of the present embodiment the broadcast content receiving section 6 is further provided with an interface 64 in conformity with a data transmission standard such as USB and serves as an adapter device which can be detachably attached to the USB interface (USB terminal) 11 of the terminal device 1. The broadcast receiving section 61 is a circuit for providing a so-called tuner function, and makes it possible to receive the respective channels of ground wave broadcasts, satellite broadcasts, cable TV broadcasts, radio broadcasts and the like by changing the frequency. Incidentally, in the case of the present embodiment, the broadcast content receiving section 6 receives radio waves through an antenna integrated with (or attached to) the section itself. However, it is possible to provide a television antenna connection terminal for connecting with another antenna to catch a broadcast signal.

In addition to this, the broadcast content receiving section 6 includes a memory 63 for storing an identifier (user ID) unique to this broadcast content receiving section 6 for accessing the IP network 3, and is provided with the functionality of transmitting the user ID in response to a request, which is issued when the network content acquisition section 12 accesses various servers on the IP network 3, and performing authentication.

The network content acquisition section 12 is a module for receiving network content such as HTML files as described above through the terminal equipment 2 by the use of a communication protocol such as TCP/IP, and in the case of the present embodiment it is realized by a LAN card in conformity with a wireless LAN standard such as IEEE802.11b in order to perform wireless communication.

In the case of the present embodiment, the combination output section 14 is provided with the functionality of invoking and running browser software 14a which is run in the terminal device 1, and as shown in Fig. 4 the browser software 14a downloads HTML (HyperText Markup Language) files, image files, music files and the like delivered by the content server 41 located on the IP network 3, parses the layout to display and play back them, browses a Web page, and combines and outputs broadcast content within the Web page. More specifically speaking, the tab included in the network content D2 (HTML file) delivered by the content server 41 are parsed to produce an area, in which a broadcast content D1 is inserted, and combine the broadcast content D1 such as a picture in the area.

In addition to this, the combination output section 14 is provided with a CM replacement section 14b which replaces the broadcast content D1 or its portion (in this case, CM portions D11 and D13) combined in the combination output section 14 with replacement CM portions D31 and D32 on the basis of a switching control signal D4 acquired from the IP network 3.

More specifically described, the combination output section 14 is provided with a content parsing section 14d for parsing the data in the broadcast content D1 which is received by the broadcast content receiving section 6, a CM detecting section 14c for detecting a CM portion on the basis of the result of parsing by the content parsing section 14d and a replacement CM reading section 14e for reading, as needed, the replacement CM portions D31 to D33 accumulated in the hard disk 16, replaces a data portion (the CM portions D11 and D13), which is designated by the switching control signal D4, with the replacement CM portions D31 to D33, and outputs the broadcast content D1 to the browser software 14a.

Incidentally, the switching control signal D4 in accordance with the present embodiment is a signal which is delivered, as needed, from the IP network 3, or for example a signal which is data periodically acquired from the IP network 3 as a list file providing the times associated with replacement.

For example, when the television combined Web page service which is provided from the server 41 is received by the terminal device 1 constructed as described above, as shown in Fig. 4, the broadcast content receiving section 6 first receives the broadcast content D1 broadcasted by the broadcast station 5, and the network content acquisition section 12 acquires the network content D2 from the server 41. The broadcast content D1 is received by the broadcast receiving section 61 in the broadcast content receiving section 6, converted by the conversion section 62 into a predetermined digital signal, and then output to the combination output sections 14 and the HDD management section 15 through the USB I/F 64 and USB I/F 11. On the other hand, the network content D2 is received by the network content acquisition section 12, accumulated in the hard disk 16 and transmitted to the browser software 14a of the combination output section 14. Meanwhile, in this case, the switching control signal D4 and the replacement CM portions D31 to D33 are also received from the server 41 and accumulated in the hard disk 16.

Then, in the combination output section 14, the broadcast content D1 and the network content D2 are combined and output by the browser software 14a. In this case, in the combination output section 14, the content parsing section 14d and the CM detecting section 14c detect a CM portion, and the replacement CM reading section 14e and the CM replacement section 14b replace the CM portion in accordance with the instruction by the switching control signal D4 and transmits the content to the browser software 14a. The browser software 14a outputs the content in which the CM as broadcasted by the broadcast station 5 is replaced with a different CM..

Meanwhile, in the case of the present embodiment, an example is explained in which the data to be replaced is a CM portion. However, the present invention is not limited thereto, but it is possible to replace the main story of the broadcast content with another program (for example, urgent news and so forth) if necessary. In this case, since the same content can be displayed whatever channel the user views and listens by the browser software, it is possible to display most urgent information in a preferential manner (or forcible manner).

### (Terminal Equipment 2))

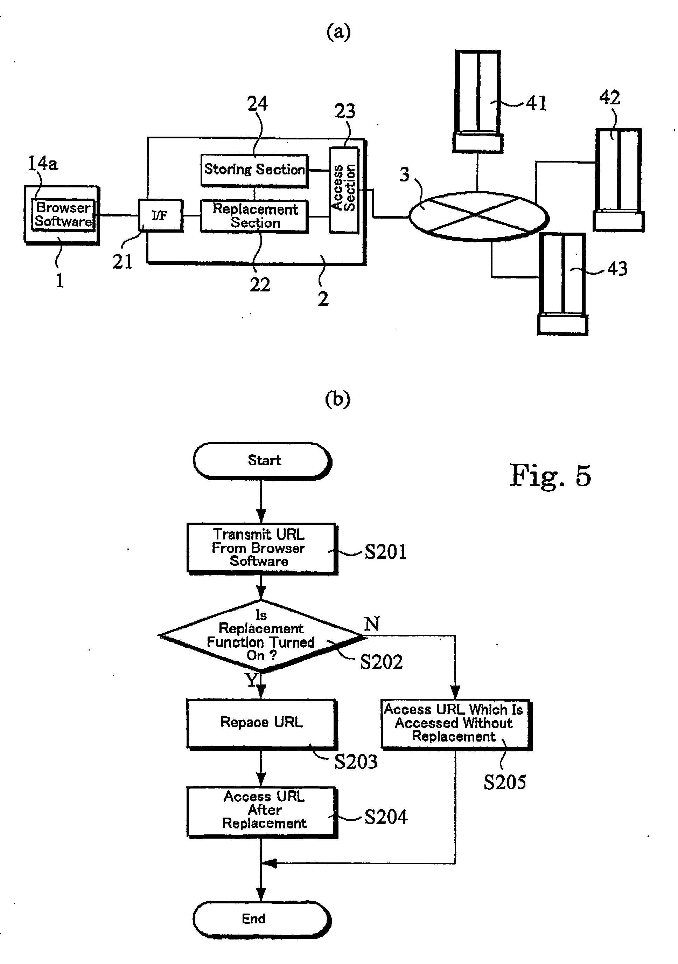

The terminal equipment 2 is a device for connecting the terminal device 1 with the IP network 3, as shown also in Fig. 5(a), and provided with an access section 23 having the modulator demodulator capability of performing the conversion between digital data and voice signals when connecting with a telephone line, a storage section 24 such as a memory, an address replacement section 22 implemented by a CPU and the like, and a communication interface 21 such as a wireless LAN.

The storage section 24 is a storage section for storing the addresses of predetermined information data, and in the case of the present embodiment, the storage section 24 stores as the address of the predetermined information data the URL of a service supporting server 41 which supports the service for delivering television combined Web pages.

The address replacement section 22 is a module for replacing the address of information data (the URL of a service unsupporting server 42) as input from the browser software 14a with the URL of the service supporting server 41 stored in the storage section 24 on the basis of a trigger signal which is input from the IP network 3 side.

The access section 23 is a module for accessing the address designated by the address replacement section 22 and the browser software 14a or the address replaced by the address replacement section 22, and performs the transmission and reception of IP packets by the use of a predetermined protocol such as TCP/IP. In addition to this, this access section 23 receives the trigger signal delivered from the service supporting server 41, and outputs the trigger signal as received to the address replacement section 22.

Incidentally, in the case of the present embodiment, when the address is replaced by the address replacement section 22, the storage section 24 stores the original information data address which is replaced, and the address replacement section 22 halts the replacement with the address of the predetermined information data on the basis of the trigger signal as received from the IP network 3 side. When the replacement of the address by the address replacement section 22 is halted, the access section 23 accesses the address of the original information stored in the storage section 24.

The system configuration constructed as described above accesses the information data by the following operation. Fig. 5(b) is a flow chart for showing the procedure of the access method.

First, the URL that the user wants to get (for example, the URL of the service unsupporting server 42) is input to the browser software, and an instruction is transmitted to the terminal device 1 to access the service unsupporting server 42 in step S201. In this case, the address replacement section 22 determines whether or not the trigger signal is received from the IP network 3 side in step S202, and if it is received the replacement function is turned on to replace the URL in step S203 and access the URL (the address of the server 41) after the replacement in step S204.

In this case, in the case of the present embodiment, the identifier (an ID and a password) required for receiving the television combined Web page service is acquired from the memory 63 in the broadcast content receiving section 6 and transmitted to the server 41. The server 41 performs user authentication on the basis of the identifier as transmitted in order to confirm that the terminal device 1 is a user which supports this service and start providing the service.

On the other hand, if it is determined in step S202 that the replacement function is turned off, the URL (the service unsupporting server 42) as input by the user is accessed without replacement in step S205.

In accordance with the present embodiment as described above, it is controlled by transmitting the trigger signal from the IP network 3 side to perform the so-called redirection, i.e., replace the address as designated by the browser software 14a with the address of the predetermined information data, and thereby it is possible to control in the service provider side whether or not the redirection is to be executed. Also, in the case of the present embodiment, after the redirection is finished or halted, the user can access the address originally intended and return to the state just before the redirection is performed.

### (Backup System)

Then, when receiving the television combined Web page service, the backup system of the information delivery system in accordance with the present embodiment uploads the broadcast content and the network content as received and accumulated in the hard disk 16 to the backup server 43 for storing.

Namely, on the terminal device 1 side, the broadcast content and the network content are viewed and listened while accumulating the data in the hard disk 16. In this process, the data occupancy ratio in the hard disk is monitored by the monitoring section 15e, and if it is determined that the occupancy ratio is greater than the predetermined ratio, the file to be uploaded is selected by referring to the setting table 15d with respect to the priority level of files. Then, the file as selected is uploaded to the backup server 43 through the upload section 15a while this file is deleted from the hard disk 16.

In the backup server 43 side, the upload data from the terminal device 1 is received by the receiving section 43a, and in the same manner as in the above first embodiment, it is determined whether or not the occupancy ratio in the user database 44b is greater than the predetermined ratio, whether or not the accumulation of only the difference is selected, and whether or not the user desires area expansion in the case where the available space is lacking, and data is saved in the predetermined scheme (i.e., upload data is saved as it is, the difference is saved, and the like).

In accordance with the backup system of the present embodiment, the broadcast content and the network content accumulated in the hard disk 16 are uploaded in accordance with the level of importance, and thereby unnecessary upload can be avoided and the amount of data to be backed up can be reduced in the server. In addition to this, since only the difference from data already accumulated is stored in the backup server 43 side, it is possible to avoid storing redundant data and make effective use of the storage capacity of the backup server.

### (Exemplary Modification)

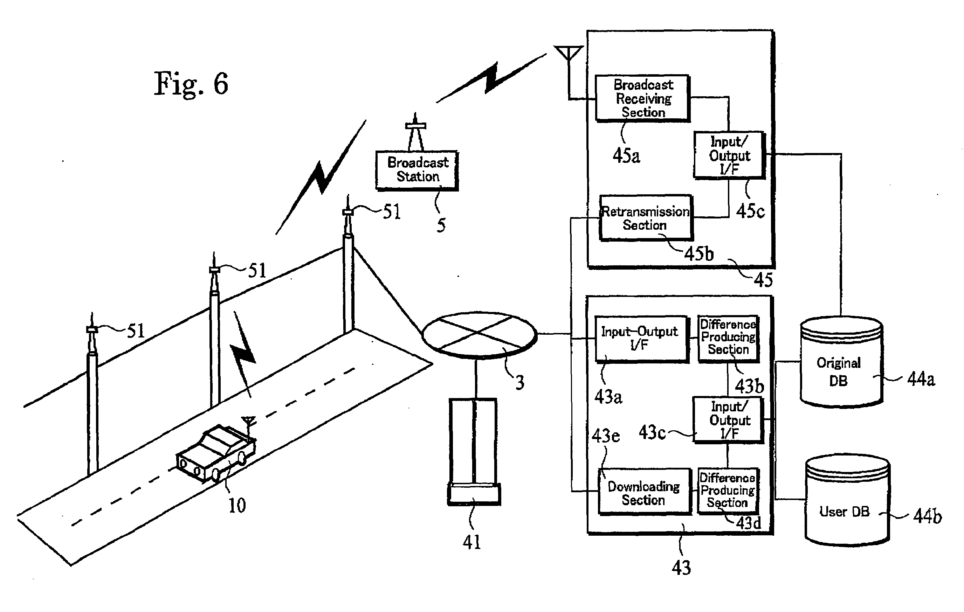

It is possible to make the following exemplary modification to the backup system and the backup method in accordance with the second embodiment as explained above. Fig. 6 is an explanatory view for showing the exemplary modification.

For example, as illustrated in Fig. 6, an automobile 10 is equipped with the terminal device 1 for viewing and listening the television combined Web page as described above. In this case, while broadcast content from the broadcast station 5 is received by the broadcast content receiving section 6 of the terminal device 1, network content is received from the service supporting server 41 connected with the IP network 3, and the both contents are combined and output by the browser software 14a.

Meanwhile, since the automobile 10 moves at a high speed, broadcast radio waves may not sufficiently be received from the broadcast station 5. Because of this, in the present exemplary modification, for example, a number of compact broadcasting towers 51 for rebroadcast are installed on telephone poles, traffic signals, crash barriers and so forth alongside the roadway.

The compact broadcasting tower 51 is wired or wireless connected to the IP network 3, serves to transmit, as broadcast radio waves, the data which is received as IP packets, and is connected to a rebroadcast server 45 on the IP network 3.

The rebroadcast server 45 is provide with a broadcast receiving section 45a for receiving radio waves broadcasted from the broadcast station 5, the input/output I/F 45C for storing broadcast content as existing data (original data) in the original database 44a as described above, a rebroadcast section 45b for transmitting the broadcast content as IP packets to the above compact broadcasting tower 51 through the IP network 3.

Then, in accordance with the rebroadcast server 45 as described above, the broadcast content which is broadcasted from the broadcast station 5 is broadcasted from the above compact broadcasting towers 51 as IP networks, received by the terminal device 1 in the automobile 10, combined with a WEB page delivered from the service supporting server 41 by the browser software 14a, and output.

Then, also in the present exemplary modification, when a recording operation is performed to the hard disk 16 which is provided in the terminal device 1 in the automobile 10, it is possible to back up the broadcast content recorded to the backup server 43 if the data occupancy ratio of the hard disk 16 is greater than a predetermined ratio. In this case, the original database 44a of the rebroadcast server 45 is shared with the backup server 43 as described above.

Then, the backup server 43 saves the data which is uploaded from the automobile 10 in the user database 44b as the difference between the uploaded data and the broadcast content which is stored in the original database 44a before rebroadcast, i.e., by extracting noise in the content as rebroadcasted which is generated during reception in the automobile 10.

In accordance with the present exemplary modification as described above, even in the case of a transportation device (automobile, railway) in which the reception of broadcast content is difficult, it is possible to securely receive broadcast content through the IP network, for example via hotspots, and upload the broadcast content to the backup server 43 on the IP network 3. In this case, on the backup server 43 side, it is possible to save the broadcast content, which is received as existing data before rebroadcast, as original data (existing data), and thereby to securely produce the difference data.

### INDUSTRIAL APPLICABILITY

In accordance with the backup system of the present invention, since the data to be uploaded is extracted and only the difference is saved when the data stored in terminal devices are backed up, it is possible to lessen the load on the backup server side.

## Claims

1. A backup system comprising:
a storage device connectable to a terminal device and operable to accumulate data; a backup server connectable to said terminal device through an IP network which is constructed by connecting communication lines with each other;
a monitoring section operable to monitor the data occupancy ratio in said storage device on said terminal device side;
an extracting section operable to extract, when the data occupancy ratio is greater than a predetermined ratio, data in accordance with the data attribute in said storage device; an upload section operable to transmit the data, which is extracted by said extracting section, to said backup server;
a difference data producing section located on said backup server side and operable to produce difference data between existing data which is already accumulated and upload data which is transmitted by said upload section;
a difference accumulating section operable to accumulate said difference data which is produced;
a downloading section operable to produce download data from said existing data and said difference data in response to a request from said terminal system, and transmit said download data, which is produced, to said terminal device.

2. The backup system as claimed in claim 1 wherein said extracting section is operable to determine, as data attributes, the extension and last update date and time of a data file, and extract data in accordance with a data attribute which is set by a user.

3. The backup system as claimed in claim 1 wherein said upload data is broadcast content, which is received through a radio wave broadcast and stored on said broadcast content side, and wherein said difference data producing section is operable to produce said difference data as noise which is generated during receiving said broadcast content.

4. The backup system as claimed in claim 1 wherein said broadcast content is reception content which is received through a radio wave broadcast by a content server located on said IP network and which is rebroadcasted by a radio wave transmitter section connected through said IP network, and wherein said existing data in said backup server is said reception content.

5. The backup system as claimed in claim 1 wherein said radio wave transmitter section is located alongside the railway or the roadway.

6. A method of backing up data accumulated in a storage device connected to a terminal device through an IP network which is constructed by connecting communication lines with each other, said method comprising:
a step of monitoring the data occupancy ratio in said storage device on said terminal device side;
a step of extracting, when the data occupancy ratio is greater than a predetermined ratio, data in accordance with the data attribute in said storage device, and transmitting the data, which is extracted by said extracting section, to said backup server;
a step of producing, on said backup server side, difference data between existing data which is already accumulated and upload data which is transmitted by said upload section, and accumulating said difference data which is produced; and
a step of producing download data from said existing data and said difference data in response to a request from said terminal system, and transmitting said download data, which is produced, to said terminal device.

7. The backup method as claimed in claim 6 wherein said upload data is broadcast content, which is received through a radio wave broadcast and stored on said broadcast content side, and wherein said difference data is noise which is generated during receiving said broadcast content.

8. The backup method as claimed in claim 6 wherein said broadcast content is reception content which is received through a radio wave broadcast by a content server located on said IP network and which is rebroadcasted through said IP
